# EUROPÄISCHE PATENTSCHRIFT

(11) **EP 1 213 325 B1**
(45) Veröffentlichungstag und Bekanntmachung des Hinweises auf die Patenterteilung: **22.12.2004**
(21) Anmeldenummer: 00403495.5
(22) Anmeldetag: 11.12.2000
(51) Int. Cl.: C08L 75/04, C08L 75/08

(54) **Flammwidrige, halogenfreie Polymermischung**
Flame-resistant, halogen-free polymer mixture
Mélange de polymères ignifugé et exempt d'halogène

(43) Veröffentlichungstag der Anmeldung: 12.06.2002
(73) Patentinhaber: Nexans, 75008 Paris (FR)
(72) Erfinder: Mehl, Alfred, Dipl.-Ing., 91166 Georgensgmund (DE)
(74) Vertreter: Döring, Roger, Dipl.-Ing.

(56) Entgegenhaltungen:
- EP-A- 0 515 344
- DE-A- 3 943 090

## Beschreibung

Die vorliegende Erfindung betrifft eine flammwidrige, halogenfreie Polymermischung nach dem Oberbegriff des Anspruchs 1.

Thermoplastisch verarbeitbares Polyurethan ist ein Werkstoff der sich in der Kabelindustrie als Mantelwerkstoff wegen seiner hervorragenden Eigenschaften bewährt hat. Der Werkstoff weist eine hohe Abriebfestigkeit, eine hohe Temperaturbeständigkeit auf und kann durch Zugabe bestimmter Materialien flammwidrig bis selbstverlöschend ausgerüstet werden. Die aus Polyurethan bestehenden Kabelmäntel sind schnitt-, einund weiterreißfest. Darüberhinaus ist Polyurethan beständig gegenüber Ozon, Mikroben, Öl und energiereicher Strahlung. Kabel mit einem Mantel aus Polyurethan sind äußerst flexibel und halten hohen Biegezyklen über enge Radien stand.

Polyurethanummantelte Kabel eigenen sich deshalb insbesondere für den Einsatz als Steuerkabel oder Schleppketten, kommen aber auch in der Verkehrstechnik zum Einsatz.

Aus der DE-A-39 04 802 ist eine flammwidrige, halogenfreie Polymermischung für Kabelmäntel bekannt, die aus 50 - 90 Gewichtsteilen Polyurethan, 10 - 50 Gewichtsteilen Polyolefincopolymer, 125 - 250 Gewichtsteilen Füllstoffen, sowie 5 - 26 Gewichtsteilen Zusatzstoffen besteht.

Die bekannte Polymermischung ist ölbeständig und abriebfest, sie ist im Brandfall raucharm und setzt keine korrosiven Gase frei. Als Füllstoffe werden insbesondere Aluminiumhydroxid (Aluminiumtrioxihydrat) oder Magnesiumhydroxid verwendet. Von den Zusatzstoffen ist insbesondere ein Hydrolyseschutzmittel zu nennen, durch welches die Neigung des Polyurethans, bei Temperaturen über 50°C und Feuchtigkeitseinwirkung zu hydrolysieren, stark reduziert wird. Ein zugesetzter Haftvermittler bewirkt eine zumindest teilweise Anbindung des Füllstoffs an die Polymere und sorgt für bessere mechanische und elektrische Eigenschaften der Polymermischung.

Thermoplastisch verarbeitbares Polyurethan - im folgenden als TPU bezeichnet - hat die zumeist unerwünschte Eigenschaft, daß es bei höheren Temperaturen eine relativ dünnflüssige Schmelze bildet. Im Brandfall wirkt sich das so aus, daß das flüssige Material abtropft und somit die Kabelseele freigelegt wird. Bei extrem hohen Temperaturen reichen die zugesetzten die Flammwidrigkeit verbessernden Materialien vielfach nicht aus und brennendes bzw. erhitztes Material tropft ab und entzündet unter Umständen anderes Material, wodurch einer raschen Ausbreitung von Bränden Vorschub geleistet wird.

Aus der DE-A-34 44 500 ist ein schwer entflammbares Kabel bekannt, bei welchem zumindest die außen liegende Schicht des Kabelmantels ganz oder teilweise aus strahlenvernetztem Polyurethan besteht. Das vernetzte Polyurethan bildet eine flammwidrige, geschlossene Hülle, die bei Flammeneinwirkung nicht abtropft und damit den darunter befindlichen weiteren Schichten im Kabelaufbau nicht die Möglichkeit gibt, in der Flamme nachzuschmelzen.

Nachteilig hierbei ist jedoch, daß die Strahlenvernetzung ein gesonderter Arbeitsgang ist und an Strahlungsvernetzungsanlagen besonders hohe Anforderungen gestellt werden, wodurch die Herstellungskosten in die Höhe getrieben werden. Ein weiterer Nachteil ist, daß vernetztes Polyurethan nicht wiederverwendbar ist und auf kostenträchtige Weise entsorgt werden muß.

Die EP-A-0 515 344 beschreibt Polymermischungen z.B. für Kabel enthaltend ein Polyurethan, ein Polymer mit reaktiven Carboxylgruppen und einen Siloxan-Vernetzer mit Amin; Hydroxy- oder Epoxy-Gruppen.

Der vorliegenden Erfindung liegt von daher die Aufgabe zugrunde, eine flammwidrige, halogenfreie Polymermischung bereitzustellen, die thermoplastisch verarbeitbar ist, im Brandfalle nicht abtropft und die nach der Verarbeitung wiederverwendbar ist.

Diese Aufgabe wird durch das im Kennzeichen des Anspruchs 1 Erfaßte gelöst.

Weitere vorteilhafte Ausgestaltungen der Erfindung sind in den Unteransprüchen dargelegt.

Das erfindungsgemäße TPU führt im Brandfall zur Bildung einer krustigen Schicht, welche verhindert, daß geschmolzenes, brennendes Material abtropft. Die entstehende Kruste hat wärmeisolierende Eigenschaften, welche eine beschleunigte Aufheizung des Materials bei Flammeneinwirkung verhindert.

Die Erfindung ist anhand von zwei Ausführungsbeispielen näher erläutert.
a)
   - 100,0 Teile: TPU Shore Härte A87 z. B. Elastollan 1185A der Fa. Elastogran
   - 66,7 Teile: Aluminiumhydroxid z. B. Martinal OL 104S der Fa. Martinswerk
   - 18,6 Teile: Resorcinol-bis-diphenylphosphat z. B. CR-733S der Fa. Nordmann & Rassmann und
   - 0,6 Teile: Erucasäureamid z. B. Loxamid E der Fa. Henkel
   wurden in einem Buss-Co-Kneter innig vermischt, geschmolzen und zu Granulat verarbeitet. Die Granulate wurden in einen Extruder eingegeben und mit der Mischung auf einer Kabelseele ein Mantel mit einer Wandstärke von 1 mm extrudiert.
b) Zu einer Mischung wie oben angegeben wurden erfindungsgemäß zusätzlich noch
   - 5,3 Teile: eines Polysiloxans mit funktionellen Methacrylat-Gruppen z. B. Silicon Pulver 4-7081 der Fa. Dow Corning
hinzugefügt und in einem Buss-Co-Kneter wie bei a) beschrieben zu einem Granulat verarbeitet und mit diesem ein Kabelmantel, wie ebenfalls bei a) beschrieben, extrudiert.

Die nach a) und b) hergestellten Kabel wurden einem Brandtest nach IEC 60332-1 unterzogen. Beide Kabel bestanden den Test, wobei bei dem nach a) hergestellten Kabel das Mantelmaterial teilweise abgetropft war und die Kabelseele frei lag und beschädigt war. Bei dem nach b) hergestellten Kabel hatte sich während der Beflammung eine schwarze, poröse, stabile Schicht auf dem Kabel gebildet. Die Kabelseele wurde nicht beeinträchtigt.

Durch die Bildung der porösen, stabilen Kruste wird auch die Flammwidrigkeit generell verbessert. So zeigt eine Materialprobe, hergestellt nach a) einen Oxigenindex - gemessen nach EN ISO 4589-1- von 26, während eine Materialprobe nach b) einen solchen von 28 aufweist.

In vergleichbarer Weise läßt sich auch das Abtropfverhalten während eines Brandes von anderen halogenfreien flammwidrigen TPU-Compounds z. B. solchen, die als Flammschutzadditive Melaminderivate (z. B. Melamincyanurat) und/oder Phosphorsäureester (z. B. Resorcinol-bis-diphenylphosphat) enthalten, verbessern.

## Patentansprüche

1. Flammwidrige, halogenfreie Polymermischung, insbesondere für den Mantel von Kabel und Leitungen, bestehend aus Polyurethan, Füllstoffen sowie Zusatzstoffen, **dadurch gekennzeichnet, daß** 100 Teilen des flammwidrigen, halogenfreien Polyurethans 1 bis 10 Teile Polysiloxan zugesetzt sind, welches funktionelle Methacrylat- und/oder Epoxy-Gruppen enthält.

2. Flammwidrige, halogenfreie Polymermischung nach Anspruch 1, **dadurch gekennzeichnet, daß** 100 Teilen des flammwidrigen, halogenfreien Polyurethans 3 bis 7 Teile Polysiloxan zugesetzt sind, welches funktionelle Methacrylat- und/oder Epoxy-Gruppen enthält.

3. Flammwidrige, halogenfreie Polymermischung nach Anspruch 1 oder 2, **dadurch gekennzeichnet, daß** das Polyurethan ein Polyetherpolyurethan ist.

## Claims

1. Flame-resistant, halogen-free polymer mixture, especially for the sheath of cables and lines, consisting of polyurethane, fillers and additives, **characterized in that** 1-10 parts polysiloxane containing functional methacrylate and/or epoxy groups are added to the 100 parts of flame-resistant, halogen-free polyurethane.

2. Flame-resistant, halogen-free polymer mixture according to claim 1, **characterized in that** 3-7 parts polysiloxane containing functional methacrylate and/or epoxy groups are added to 100 parts of the flame-resistant, halogen free polyurethane.

3. Flame-resistant, halogen-free polymer mixture according to claim 2, **characterized in that** the polyurethane is a polyether polyurethane.

## Revendications

1. Mélange polymérique inhibiteur de combustion, sans halogène, en particulier pour le gainage de câbles et de lignes, se composant de polyuréthane, d'agents de remplissage ainsi que d'additifs, **caractérisé en ce que** 1 à 10 parts de polysiloxane sont ajoutées aux 100 parts du polyuréthane inhibiteur de combustion, sans halogène, ledit polysiloxane possédant des fonctions méthacryliques et/ou époxydiques.

2. Mélange polymérique inhibiteur de combustion, sans halogène, selon la revendication 1, **caractérisé en ce que** 3 à 7 parts de polysiloxane sont ajoutées aux 100 parts du polyuréthane inhibiteur de combustion, sans halogène, ledit polysiloxane possédant des fonctions méthacryliques et/ou époxydiques.

3. Mélange polymérique inhibiteur de combustion, sans halogène, selon la revendication 1 ou 2, **caractérisé en ce que** le polyuréthanne est un polyuréthanne polyéther.
